# EUROPÄISCHE PATENTSCHRIFT

(11) **EP 0 475 217 B1**
(45) Veröffentlichungstag und Bekanntmachung des Hinweises auf die Patenterteilung: **01.02.1995**
(21) Anmeldenummer: 91114642.1
(22) Anmeldetag: 30.08.1991
(51) Int. Cl.: F16J 15/34, F16N 29/02, F16C 33/66, F16H 57/04, F16J 15/16

(54) **Dichtungsanordnung und Dichtelement**
Sealing arrangement and sealing element
Dispositif d'étanchéité et élément d'étanchéité

(30) Priorität: 07.09.1990 DE 4028380
(43) Veröffentlichungstag der Anmeldung: 18.03.1992
(73) Patentinhaber: DEERE & COMPANY, Moline, Illinois 61265 (US)
(72) Erfinder: Eckhardt, Uli, W-6720 Speyer (DE)
(74) Vertreter: Feldmann, Bernhard

(56) Entgegenhaltungen:
- US-A- 2 253 904
- US-A- 4 139 203

## Beschreibung

Die Erfindung betrifft eine Dichtungsanordnung und ein zugehöriges Dichtelement zur Dichtung Zweier Teile, insbesondere zur Dichtung zweier gegeneinander verdrehbarer Getriebehohlwellen, bei der das wenigstens eine Dichtelement im wesentlichen hülsenartig ausgebildet ist und wenigstens eine als Dichtfläche ausgebildete Stirnseite aufweist und ein gegen die Dichtfläche vorgespanntes Federelement vorgesehen ist.

Zur Abdichtung des Innenraumes zweier benachbarter, sich relativ zueinander drehender Getriebehohlwellen gegenüber einem äußeren Raum werden Dichtelemente verwendet. Für diese Anwendung werden beispielsweise Kolbenringe genutzt. Diese werden in radialen Nuten einer ersten Hohlwelle montiert. In zusammengebautem Zustand liegt die äußere Umfangsfläche der Kolbenringe an der zweiten Hohlwelle an. Da die Lage des Dichtelementes während der Montage nicht einsehbar ist, wird ein unbeabsichtigtes Abscheren des Kolbenringes häufig nicht unmittelbar beim Zusammenbau bemerkt, sondern erst, wenn Funktionsstörungen beim Betrieb auftreten. Es wirkt sich bei der Verwendung von Kolbenringen auch nachteilig aus, daß mit zunehmendem Durchmesser der Ringe die infolge Reibung auftretende Verlustleistung ansteigt.

Bei Verwendung hülsenartiger Dichtelemente der eingangs genannten Art, bei denen eine stirnseitige Dichtfläche mit einer entsprechenden Dichtfläche eines der beiden zu dichtenden Teile zusammenwirkt, und bei der beispielsweise eine äußere Mantelfläche der Dichthülse dichtend an einer entsprechenden Fläche des anderen Teiles anliegt, können Dichtprobleme auftreten. Dies liegt daran, daß infolge von Fertigungstoleranzen und von Wärmeausdehnungen bei erhöhten Betriebstemperaturen bei der Auslegung der Dichthülse ein axiales Spiel berücksichtigt werden muß, so daß die Dichthülse auch nach der Montage axial verschiebbar ist und ihre Stirnfläche nicht immer an der entsprechenden Dichtfläche des zu dichtenden Teiles anliegt, wodurch sich eine unkontrollierte Leckage ergibt. In einigen Anwendungsfällen herrscht innerhalb der Hohlwellen ein Überdruck, durch den die Dichthülse in Richtung ihrer stirnseitigen Dichtfläche gedrückt wird und eine ausreichende Dichtung herbeiführt.

Durch die DE-AS 14 75 763 ist eine Gleitringdichtung für drehbare Rohrverbindungen bekannt geworden, bei der ein im wesentlichen hülsenartig ausgebildeter Gleitring mit einer stirnseitigen Fläche versehen ist, die in abdichtender Gleitberührung mit der Dichtfläche eines an einer Welle befestigten und mit dieser umlaufenden Gegenlaufringes steht. Eine federnde Einrichtung überträgt über einen Federteller und einen Sekundärdichtungsring einen axialen Druck auf den Gleitring und drückt dessen stirnseitige Fläche gegen die Dichtfläche. Durch den ständigen Druck der aus einer Vielzahl von Einzelteilen zusammengesetzten federnden Einrichtung können Reibungsverluste und Verschleiß an der Dichtfläche auftreten.

Die US-A-2,253,904 beschreibt einen Druckdichtungsring zur Abdichtung eines Spaltes zwischen einer Welle und einem die Welle umgebenden Gehäuse. Es wird vorgeschlagen, ein Bimetallteil vorzusehen, das auf das Dichtmaterial einwirkt und dieses gegen die zu dichtende Umlauffläche der Welle drückt. Damit soll sich der durch den Druckdichtungsring auf die Dichtfläche der Welle ausgeübte Dichtdruck in Abhängigkeit der Arbeitstemperatur einstellen lassen. Auch hier wirkt ständig ein Dichtdruck, der zu Reibungsverlusten und Verschleiß an den Dichtflächen führen kann.

Ferner ist durch die DE-C2-29 45 659 eine Abdichtungsanordnung zum Abdichten eines Spaltes zwischen einem rotierenden und einem feststehenden Teil bekannt geworden, bei der zwischen den beiden abzudichtenden Teilen eine Dichtbuchse angeordnet ist, welche auf einen dieser beiden Teile unter Bildung eines Schiebesitzes und im Betrieb unverdrehbar zentriert ist. Die Dichtbuchse ist einseitig durch einen Überdruck belastet und wird durch diesen mit ihrer Stirnseite gegen eine rotierende Schulter des Rotorteiles gepreßt. Während der Einlaufphase wird die Dichtbuchse an ihrer Stirnseite abgenützt, bis ein Buchsenbund an dem feststehenden Gehäuseteil ansteht. Danach soll die Abdichtung nahezu spielfrei und berührungslos arbeiten. Diese Abdichtanordnung ist jedoch nur wirksam, wenn auf einer Seite der Dichtbuchse ein Überdruck ansteht.

Die mit der Erfindung zu lösende Aufgabe wird darin gesehen, eine Dichtungsanordnung der eingangs genannten Art derart zu verbessern, daß unter Vermeidung der beschriebenen Probleme, unabhängig von den Druckverhältnissen, eine gewünschte Dichtigkeit zwischen zwei Teilen gewährleistet ist und Reibungsverluste und Verschleiß an der Dichtfläche vermieden werden.

Die Aufgabe wird erfindungsgemäß durch die kennzeichnenden Merkmale des Patentanspruches 1 gelöst.

Die Federkraft des Federelementes soll wenigstens bei der Erstmontage wirksam sein. Sie kann dabei auf die herrschenden Druckverhältnisse ausgelegt werden, so daß die Stirnfläche des Dichtelementes unter allen Betriebsbedingungen an der Dichtfläche des entsprechenden Teiles anliegt.

Bedingt durch das Federelement können unterschiedliche Abstände, die z. B. durch Fertigungstoleranzen, durch Kombination von unterschiedlichen Teilen und/oder durch temperaturbedingte Längen- oder Abstandsänderungen zwischen den Teilen auftreten können, ausgeglichen werden. Nach dem Einbau des Dichtelementes und dem Zusammenbau der Teile liegt die Stirnfläche des Dichtelementes sofort an der Dichtfläche des entsprechenden Teiles an und dichtet den zu dichtenden Raum gegen einen angrenzenden Raum auch dann ab, wenn kein Druckunterschied zwischen diesen Räumen herrscht. Die erfindungsgemäße Dichtungsanordnung ermöglicht eine einfache und sichere Montage von gegeneinander abzudichtenden Getriebehohlwellen, auch an Stellen, die nicht eingesehen werden können.

Die erfindungsgemäße Dichtungsanordnung findet bevorzugt in Getriebe-Antriebssträngen, insbesondere von Ackerschleppern oder anderen Nutzfahrzeugen Anwendung, die eine koaxiale Anordnung von sich im Betrieb mit einer größeren Relativdrehzahl zueinander drehender Getriebehohlwellen aufweisen. Zumeist wird im Inneren dieser Hohlwellen ein Öl- oder Schmiermittelstrom durch einen komplexen Getriebe-Antriebsstrang geleitet, welcher Getriebelager, Losräder, Synchronisierungen und andere Bauteile mit dem nötigen Schmiermittel bzw. Kühlmittel direkt und kontrolliert versorgt. Durch die erfindungsgemäße Dichtungsanordnung werden die Getriebehohlwellen gegeneinander abgedichtet, um einem unerwünschten Verlust von Schmier- bzw. Kühlmitteln entgegenzutreten. Dabei können unterschiedliche Abstände der gegeneinander abzudichtenden Hohlwellen ausgeglichen werden, die durch unausweichliche Fertigungstoleranzen bedingt sind.

Das Federelement wird durch entsprechende Werkstoffwahl, Werkstoffsusammensetzung und konstruktive Ausführung so ausgebildet, daß es bei Erreichen einer bestimmten Temperatur, vorzugsweise der Betriebstemperatur der gegeneinander abzudichtenden Teile, seine Federkraft verliert. Beim Zusammenbau besitzt das Federelement seine volle Federspannung, so daß nach erfolgter Montage die Stirnfläche des Dichtelementes gegen die Dichtfläche gedrückt wird. Beim erstmaligen Erreichen der Betriebstemperatur der gegeneinander abzudichtenden Teile verliert das Federelement seine Federvorspannung. Damit liegt zwar die Stirnseite des Dichtelementes auch weiterhin an der Dichtfläche an, so daß die Dichtleistung des Dichtelementes erhalten bleibt. Die Stirnseite des Dichtelementes wird nun jedoch nicht mehr gegen die Dichtfläche gedrückt. Bei weiterem Betrieb zweier sich gegeneinander verdrehender Teile treten damit weder Reibungsverluste noch Verschleiß an der Dichtfläche auf.

Der besondere Vorteil der plastischen Verformung des Federelementes bei höheren Temperaturen liegt darin, daß unabhängig von den Toleranzen der zu dichtenden Teile sich nach Inbetriebnahme das Dichtelement mit dem Federelement in seiner Abmessung den individuellen Gegebenheiten anpaßt.

In einigen Anwendungsfällen ist es wünschenswert, daß die Dichtung zwischen Dichtelement und dem stirnseitig anliegenden Teil nicht einen hermetischen Verschluß bildet, sondern einen bestimmten, dosierten Durchfluß erlaubt. Hier ist es von Vorteil, in der Stirnfläche des Dichtelementes Aussparungen oder Bohrungen vorzusehen, durch die eine dosierte Leckage des zu dichtenden Mediums in den angrenzenden Raum erfolgt. Die Aussparungen sind zweckmäßigerweise als Schlitze ausgebildet, die sich, ausgehend von der Stirnfläche, axial in das Dichtelement erstrecken.

Für die Erleichterung der Montage ist es vorteilhaft, an dem Dichtelement Rastmittel vorzusehen, die eine Verrastung des Dichtelementes mit einem der Teile ermöglichen. Hierbei kann es sich vorzugsweise um wenigstens eine am Dichtelement angeordnete, nach außen vorspringende Noppe handeln, die in eine entsprechende Ausnehmung in dem Teil eingreift. Bei der Montage läßt sich somit das Dichtelement in ein Teil einrasten und wird an diesem während der Montage der gegeneinander abzudichtenden Teile verliersicher gehalten.

Gemäß einer besonders bevorzugten Ausgestaltung der Erfindung ist das Federelement an dem Dichtelement angeformt, so daß beide Elemente sich in einem Bauteil verkörpern. Hierdurch wird die Zahl der Einzelteile reduziert und die Montage erleichtert.

Eine bevorzugte einfache Form ist durch ein im wesentlichen als Hohlzylinder ausgebildetes Dichtelement gegeben, dessen eine Stirnseite als Dichtfläche dient und an dessen anderer Stirnseite das wenigstens eine Federelement angeformt ist. Das Federelement wird dabei zweckmäßigerweise durch eine in etwa tangential verlaufende und in axialer Richtung hervorstehende Nase gebildet, die sich federnd in Richtung des Hohlzylinders des Dichtelementes drücken läßt und sich in montiertem Zustand an einer Stirnfläche des anderen Teiles abstützt.

Vorzugsweise besteht das Dichtelement aus Kunststoff und ist beispielsweise als Kunststoffspritzteil ausgebildet, wodurch ein kostengünstig herstellbares Bauteil gegeben ist.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: den Querschnitt eines Teiles eines Getriebes mit zwei Hohlwellen und einer erfindungsgemäßen Dichtungsanordnung,
- Fig. 2: den Querschnitt eines erfindungsgemäßen Dichtelementes längs des Schnittes II - II in Fig. 3 und
- Fig. 3: die Aufsicht auf ein Dichtelement gemäß Fig. 2.

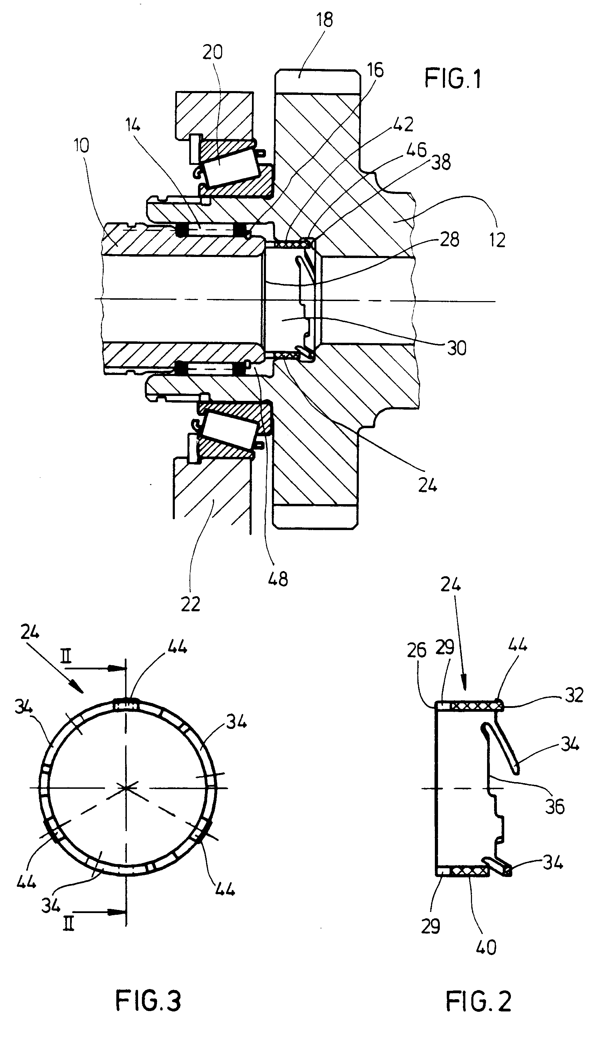

Fig. 1 stellt einen Ausschnitt eines Getriebe-Antriebsstranges dar. Eine erste Getriebehohlwelle 10 ragt teilweise in eine Ausnehmung einer zweiten Getriebehohlwelle 12 hinein und wird durch ein Nadellager 14 in dieser gelagert. Das Nadellager 14 ist durch einen Sprengring 16 auf der ersten Getriebehohlwelle 10 gesichert. Die zweite Getriebehohlwelle 12 trägt einen Zahnkranz 18 und stützt sich über ein Rollenlager 20 am Getriebegehäuse 22 ab. Durch den Innenraum 30 der beiden Getriebehohlwellen 10, 12 wird ein Ölstrom geleitet.

Zwischen den beiden Getriebehohlwellen 10, 12 ist ein hülsenförmiges Dichtelement 24 angeordnet, welches ein Austreten des Ölstromes zwischen den beiden Getriebehohlwellen 10, 12 weitgehend verhindern soll. Dieses Dichtelement 24 ist in den Figuren 2 und 3 vergrößert dargestellt. Das Dichtelement 24 ist ein im wesentlichen als Hohlzylinder ausgebildetes Kunststoffteil. Seine erste Stirnseite 26 dient als Dichtfläche, die an einer stirnseitigen Dichtfläche 28 der ersten Getriebehohlwelle 10 anliegt. Ausgehend von der ersten Stirnseite 26 des Dichtelementes 24 erstrecken sich axial in die Dichthülse zwei sich gegenüberliegende Schlitze 29. Durch diese Schlitze kann eine geringe, dosierte Ölmenge aus dem Innenraum 30 der beiden Getriebehohlwellen 10, 12 austreten und zum Nadellager 14 zu dessen Schmierung abfließen.

Die zweite Stirnseite 32 des Dichtelementes 24 ist zerklüftet ausgeformt. Von ihr stehen drei auf dem Umfang gleichmäßig verteilte Federelemente 34 axial ab, die sich durch Aufbringen einer axialen Kraft in taschenförmige Ausnehmungen 36 des Dichtelementes 24 drücken lassen. Die Federelemente 34 sind in etwa tangential ausgerichtete Nasen, die der Zylinderform des Dichtelementes 24 folgen, in axialer Richtung abgespreizt sind und über die zweite Stirnseite 32 hervorstehen. Im zusammengebauten Zustand liegen die Federelemente 34 an einer Stirnfläche 38 der zweiten Getriebehohlwelle 12 an, stützen das Dichtelement 24 ab und drücken es in Richtung Dichtfläche 28 der ersten Getriebehohlwelle 10.

Die äußere Mantelfläche 40 des Dichtelementes 24 ist zylinderförmig ausgebildet und greift dichtend in eine zylinderförmige Ausnehmung 42 der zweiten Getriebehohlwelle 12 ein. Im Bereich der zweiten Stirnseite 32 des Dichtelementes 24 befinden sich drei auf dem Umfang gleichmäßig verteilte Noppen 44, die radial nach außen über die Zylindermantelfläche 40 des Dichtelementes 24 vorstehen und in radialer Richtung federnd ausgebildet sind. Im eingebauten Zustand verrasten die Noppen 44 in einer Ausdrehung 46, zu der sich die zylinderförmige Ausnehmung 42 der zweiten Getriebehohlwelle 12 aufweitet.

Für den Zusammenbau wird zunächst das Dichtelement 24 axial in die Ausnehmung 42 der zweiten Getriebehohlwelle geschoben, bis die Noppen 44 hinter der Ausdrehung 46 verrasten. Dann kann die erste Getriebehohlwelle 10, die das Nadellager 14 trägt, in die entsprechende Ausnehmung 48 der zweiten Getriebehohlwelle 12 gesteckt werden, wobei das Dichtelement 24 zusammengedrückt wird, so daß sich die Federelemente 34 gegen ihre Vorspannung dem hülsenförmigen Grundkörper des Dichtelementes 24 annähern. Wird das Getriebe in Betrieb genommen, so erwärmt sich das in dem Innenraum 30 fließende Öl. Bei Erreichen der Betriebstemperatur verlieren die Federelemente 34 ihre Spannkraft und das Dichtelement 24 nimmt eine Länge ein, wie sie in diesem Betriebszustand durch die entsprechenden, sich gegenüberliegenden Flächen 28, 38 der beiden Getriebehohlwellen 10, 12 gegeben ist. Das Dichtelement drückt nicht mehr auf diese Flächen 28, 38, so daß weder Verschleiß noch Reibungsverluste auftreten. Durch die Schlitze 29 kann ein Teilstrom des Getriebeöles in den angrenzenden Raum 48 abfließen und zur Schmierung des Nadellagers 14 herangezogen werden.

## Patentansprüche

1. Dichtungsanordnung zur Dichtung zweier Teile, insbesondere zur Dichtung zweier gegeneinander verdrehbarer Getriebehohlwellen (10, 12), mit wenigstens einem im wesentlichen hülsenartigen Dichtelement (24), welches wenigstens eine als Dichtfläche ausgebildete Stirnseite (26) aufweist, und mit wenigstens einem gegen die Dichtfläche vorgespannten Federelement (34), dadurch gekennzeichnet, daß das wenigstens eine Federelement (34) bei einer erhöhten Temperatur seine Federvorspannung verliert und sich plastisch verformt.

2. Dichtungsanordnung nach Anspruch 1, dadurch gekennzeichnet, daß das wenigstens eine Federelement (34) seine Federkraft bei einer Temperatur verliert, die in etwa der Betriebstemperatur der gegeneinander zu dichtenden Teile (10, 12) entspricht.

3. Dichtungsanordnung nach Anspruch 1 oder 2, dadurch gekennzeichnet, daß die stirnseitige Dichtfläche Aussparungen aufweist.

4. Dichtungsanordnung nach Anspruch 3, dadurch gekennzeichnet, daß von der Stirnseite (26) aus sich axial erstreckende Schlitze (29) in das Dichtelement (24) eingelassen sind.

5. Dichtungsanordnung nach einem der Ansprüche 1 bis 4, dadurch gekennzeichnet, daß Rastmittel (44) vorgesehen sind, die eine Verrastung des Dichtelementes (24) mit einem der Teile (12) ermöglichen.

6. Dichtungsanordnung nach Anspruch 5, dadurch gekennzeichnet, daß am Dichtelement (24) wenigstens eine nach außen vorspringende Noppe (44) vorgesehen ist, die als Rastmittel dient.

7. Dichtelement einer Dichtungsanordnung nach einem der Ansprüche 1 bis 6, dadurch gekennzeichnet, daß das Federelement (34) an dem Dichtelement (24) angeformt ist.

8. Dichtelement nach Anspruch 7, dadurch gekennzeichnet, daß es im wesentlichen als Hohlzylinder ausgebildet ist, dessen eine Stirnseite (26) die Dichtfläche bildet und im Bereich dessen anderer Stirnseite (32) das wenigstens eine Federelement (34) angeformt ist.

9. Dichtelement nach Anspruch 7 oder 8, dadurch gekennzeichnet, daß das Federelement (34) eine in etwa tangential verlaufende und in axialer Richtung hervorstehende Nase ist.

10. Dichtelement nach einem der Ansprüche 7 bis 9, dadurch gekennzeichnet, daß es aus Kunststoff besteht.

## Claims

1. A sealing arrangement for sealing two parts, especially for sealing two mutually rotatable hollow gear shafts (10, 12), with at least one essentially sleeve-like sealing element (24), which has at least one end surface (26) formed as a sealing surface and at least one spring element (34) biased against the sealing surface, characterized in that the at least one spring element (34) loses its spring bias and deforms plastically at a raised temperature.

2. A sealing arrangement according to claim 1, characterized in that the at least one spring element (34) loses its spring force at a temperature which corresponds to approximately the operating temperature of the parts (10, 12) to be sealed relative to one another.

3. A sealing arrangement according to claim 1 or 2, characterized in that the end sealing surface has recesses.

4. A sealing arrangement according to claim 3, characterized in that axially extending slits (29) are let into the sealing element (24) from the end surface (26).

5. A sealing arrangement according to any of claims 1 to 4, characterized in that detent means (44) are provided which facilitate engagement of the sealing element (24) with one of the parts (12).

6. A sealing arrangement according to claim 5, characterized in that at least one outwardly projecting pip (44) is provided on the sealing element (24) and serves as the detent means.

7. A sealing element of a sealing arrangement according to any of claims 1 to 6, characterized in that the spring element (34) is moulded on to the sealing element (24).

8. A sealing element according to claim 7, characterized in that it is substantially in the form of a hollow cylinder, one end surface (26) of which forms the sealing surface and with at least one spring element (34) moulded on in the region of the other end surface (32).

9. A sealing element according to claim 7 or 8, characterized in that the spring element (34) is a nose extending approximately tangentially and projecting axially.

10. A sealing element according to any of claims 7 to 9, characterized in that it consists of plastics material.

## Revendications

1. Dispositif d'étanchéité pour réaliser l'étanchéité de deux pièces, notamment pour réaliser l'étanchéité de deux arbres creux de transmission (10,12), qui tournent l'un par rapport à l'autre, comportant au moins un élément d'étanchéité essentiellement en forme de douille (24), qui possède au moins une face frontale (26) réalisée sous la forme d'une surface d'étanchéité, et au moins un élément de ressort (34) précontraint contre la surface d'étanchéité, caractérisé en ce que le au moins un élément de ressort (34) perd sa précontrainte à une température accrue et se déforme plastiquement.

2. Dispositif d'étanchéité selon la revendication 1, caractérisé en ce que le au moins un élément de ressort (34) perd sa force à une température qui correspond approximativement à la température de fonctionnement des pièces (10, 12) devant être étanchéifiée l'une par rapport à l'autre.

3. Dispositif d'étanchéité selon la revendication 1 ou 2, caractérisé en ce que la surface d'étanchéité frontale comporte des évidements.

4. Dispositif d'étanchéité selon la revendication 3, caractérisé en ce que des fentes axiales (29) sont aménagées dans l'élément d'étanchéité (24), à partir de la face frontale (26).

5. Dispositif d'étanchéité selon l'une des revendications 1 à 4, caractérisé en ce qu'il est prévu des moyens d'encliquetage (44) permettant un encliquetage de l'élément d'étanchéité (24) avec l'une des parties (12).

6. Dispositif d'étanchéité selon la revendication 5, caractérisé en ce que sur l'élément d'étanchéité (24) est prévu au moins un bossage (44) qui fait saillie extérieurement et sert de moyen d'encliquetage.

7. Élément d'étanchéité d'un dispositif d'étanchéité selon l'une des revendications 1 à 6, caractérisé en ce que l'élément de ressort (34) est formé sur l'élément d'étanchéité (24).

8. Élément d'étanchéité selon la revendication 7, caractérisé en ce qu'il est agencé essentiellement sous la forme d'un cylindre creux, dont une face frontale (26) forme la surface d'étanchéité et le au moins un élément de ressort (34) est formé au niveau de l'autre face d'étanchéité (32) de ce cylindre.

9. Élément d'étanchéité selon la revendication 7 ou 8, caractérisé en ce que l'élément de ressort (34) est un bec qui s'étend approximativement tangentiellement et fait saillie axialement.

10. Élément d'étanchéité selon l'une des revendications 7 à 9, caractérisé en ce qu'il est réalisé en matière plastique.
